# EUROPEAN PATENT SPECIFICATION

(11) **EP 1 855 872 B1**
(45) Date of publication and mention of the grant of the patent: **29.04.2009**
(21) Application number: 06723273.6
(22) Date of filing: 07.03.2006
(51) Int. Cl.: B29D 11/00

(54) **METHOD FOR PRODUCING CONTACT LENSES**
VERFAHREN ZUR HERSTELLUNG VON KONTAKTLINSEN
PROCÉDÉ DE FABRICATION DE LENTILLES DE CONTACT

(30) Priority: 09.03.2005 US 659978 P
(43) Date of publication of application: 21.11.2007
(73) Proprietor: NOVARTIS AG, 4056 Basel (CH)
(72) Inventor: MATSUZAWA, Yasuo, Roswell, GA 30076 (US); TUREK, Richard, Charles, Atlanta, GA 30319 (US)
(74) Representative: Bohest AG
(86) International application number: PCT/EP2006/002091
(87) International publication number: WO 2006/094771

(56) References cited:
- EP-A- 0 447 169
- US-A- 5 264 161

## Description

The present invention is related to an improved method for producing contact lenses, in particular hydrophobic silicone hydrogel contact lenses.

In recent years, silicone hydrogel contact lenses, for example, Focus NIGHT & DAYS* and O₂OPTIX^{™} (both from CIBA VISION), have become more and more popular because of corneal health benefits provided by their high oxygen permeability and comfort.

Silicone hydrogel contact lenses can be manufactured economically in large numbers by a conventional full-mold process involving disposable molds, which is for example disclosed in WO-A-87/04390, EP A-0367513 and EP-A-0657264.

In a conventional molding process, a predetermined amount of a polymerizable or crosslinkable material is introduced into a disposable mold comprising a female (concave) mold half and a male (convex) mold half. The female and male mold halves cooperate with each other to form a mold cavity having a desired geometry for a contact lens. Typically, a surplus of polymerizable or crosslinkable material is used so that when the male and female halves of the mold are closed, the excess amount of the material is expelled out into an overflow area adjacent to the mold cavity. The polymerizable or crosslinkable material remaining within the mold is polymerized or cross-linked by means of actinic radiation (e.g. UV irradiation, ionized radiation, microwave irradiation) or by means of heating. The starting material in the mold cavity is cured to form a lens while the excess material in the overflow area is partially or completely cured to form flashes. After curing, the mold is separated into the male and female mold halves with the formed lens adhered onto either male or female mold half.

EP-A-0447169 generally discloses a method for manufacturing hydrophilic contact lenses, wherein the molds are immersed in hot water to remove unpolymerised materials and to release the lens from the mold. US-A-5 264 161 discloses releasing hydrophilic contact lenses from molds.

For silicone hydrogel contact lenses however, it is known that they are difficult to be removed from the mold half due to a strong adhesion between the contact lens and the mold half. It is believed that this strong adhesion is due to the tackiness of the surface of the silicone hydrogel lens. If the lens is removed from the mold half by force, the lens can adhere to itself (curl) and lens handling can be difficult and/or the lens can be damaged.

After mold separation, the lens on its respective mold half (male or female mold half) is therefore generally first subjected to extraction with an organic solvent (e.g. isopropyl alcohol) or a solvent mixture. After extraction, the lens, still on the mold half, is equilibrated in water and then removed from the mold half.

WO-A-93/04834 discloses an improved method for manufacturing hydrophilic contact lenses, *inter alia* made of silicone-containing hydrogels, wherein surfactants are added to the hydration bath to assist in the mold release and processing of hydrophilic contact lenses. The concentration of surfactants in the hydration bath ranges from 0.1 to 10 wt%, preferably 0.25 to 10 wt% and most preferably is 0.5 wt% when the bath temperature is 40°C.

The removed lens is further subjected to other process steps, such as, for example, plasma treatment, hydration, sterilization, etc.

In general, extraction and equilibration of lenses are carried out in batch processes. There are some disadvantages associated with these processes. First, mold halves takes up valuable space in an extraction or equilibration tank and therefore reduce the capacity of extraction which can be carried out in each tank. Second, lens flashes can be partially or completely dissolve in an extraction bath. Any dissolution of lens flashes can potentially reduce extraction efficiency. Third, lens flashes may be still attached to the lens even after extraction and equilibration. Any lens with flashes attached thereto will be rejected and thereby reduces production yield.

An organic solvent, such as, e.g. isopropyl alcohol (IPA), can be used to dislodge a silicone-hydorgel lens from its adhering mold half. The solvent swells the lens and helps reduce the forces holding the lens to the mold half surface. However, once a lens is swollen, the large size of the lens makes it difficult to handle due to lack of mechanical strength. In addition, the lens after swelling in an organic solvent may still be sticky or tacky.

WO-A-01/30558 describes a different approach for dislodging a lens from its adhering mold half, by lowering the temperature of the contact lens with a cryogenic material to a temperature and for a time sufficient for the lens to release from its adhering mold half without the application of external forces. The lowering of the temperature of the contact lens is accomplished by direct or indirect contact with a cryogenic substance, such as liquid nitrogen, liquid helium, liquid carbon dioxide, or solid carbon dioxide ("dry ice"). When a cryogenic substance is used to cool down a silicone hydrogel lens below its glass transition temperature (T_{g}), the surface tackiness temporarily freezes. This makes the lens separate from the mold half because of reduction in the tackiness and lens size reduction. However, after separation the lens becomes sticky or tacky again, which makes the lens handling difficult. In addition, use of a cryogenic substance can significantly increase product costs.

Therefore, it would be beneficial to provide an improved process in which each lens is separated from its adhering mold half and/or lens flashes before extraction.

In one aspect, the invention provide a method for producing contact lenses. The method comprises: providing a mold including a male mold half having a first molding surface and a female mold half having a second molding surface, wherein the male and female mold halves are configured to receive each other such that a mold cavity is formed between the first and second molding surfaces when the mold is closed; dispensing a specific amount of a silicone hydrogel lens-forming material into one of the male and female mold halves; mating the male and female mold halves to close the mold; curing the silicone hydrogel lens-forming material located between the two mold halves, thereby forming a molded silicone hydrogel contact lens having a hydrophobicity characterized by an average water contact angle of greater than 100 degrees; separating the mold into the male and female mold halves, with the silicone hydrogel contact lens adhered on one of the male and female mold halves; dispensing a hot water over the lens and/or in the lens-adhering mold half; allowing the hot water to penetrate into the interface between the lens and the lens-adhering mold half so as to reduce adhesion between the lens and the lens-adhering mold half; and removing the lens from the lens-adhering mold half for further processing.

A "hydrogel" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers.

A "silicone hydrogel" refers to a hydrogel obtained by copolymerization of a polymerizable composition comprising at least one silicone-containing monomer or at least one silicone-containing macromer.

A "monomer" means a low molecular weight compound that comprises one or more crosslinkable groups and can be crosslinked and/or polymerized actinically or thermally or chemically to obtain a crosslinked and/or polymerized polymer. Low molecular weight typically means average molecular weights less than 700 Daltons.

A "macromer" refers to a medium and high molecular weight compound or polymer that contains functional groups capable of undergoing further polymerizing/crosslinking reactions. Medium and high molecular weight typically means average molecular weights greater than 700 Daltons. Preferably, a macromer contains ethylenically unsaturated groups and can be polymerized actinically or thermally. Ethylenically unsaturated groups include acryloyl, methacryloyl, allyl, vinyl, styrenyl, or other C=C containing groups.

As used herein, "actinically" in reference to curing or polymerizing of a polymerizable composition or material means that the curing (e.g., crosslinked and/or polymerized) is performed by actinic irradiation, such as, for example, UV irradiation, ionized radiation (e.g. gamma ray or X-ray irradiation) or microwave irradiation.

A "polymer" means a material formed by polymerizing/crosslinking one or more monomers, macromers and or oligomers. "Molecular weight" of a polymeric material (including monomeric or macromeric materials), as used herein, refers to the number-average molecular weight (Mₙ) unless indicated otherwise.

A "lens-forming material" (lens formulation) refers to a polymerizable composition which can be cured (i.e., polymerized and/or crosslinked) thermally or actinically or chemically to obtain a crosslinked polymer. Lens-forming materials are well known to a person skilled in the art. In accordance with the invention, a lens-forming material comprises at least one silicon-containing monomer or macromer. Exemplary lens formulations include the formulations of lotrafilcon A, lotrafilcon B, etafilcon A, genfilcon A, lenefilcon A, polymacon, acquafilcon A, balafilcon, senofilcon A, and the like. A lens-forming material can further include other components, such as an initiator (e.g., a photoinitiator or a thermal initiator), a visibility tinting agent, UV-blocking agent, photosensitizers, and the like.

Examples of silicone-containing monomers include, methacryloxyalkylsiloxanes, 3-methacryloxy propylpentamethyldisiloxane, bis(methacryloxypropyl)tetramethyl-disiloxane, monomethacrylated polydimethylsiloxane, mercapto-terminated polydimethylsiloxane, N-[tris(trimethylsiloxy)silylpropyl]acrylamide, N-[tris(trimethylsiloxy)silylpropyl]methacrylamide, tris(pentamethyldisiloxyanyl)-3-methacrylatopropylsilane (T2), and tristrimethylsilyloxysilyl-propyl methacrylate (TRIS). A preferred siloxane-containing monomer is TRIS, which is referred to as 3-methacryloxypropyltris(trimethylsiloxy) silane or tristrimethylsilyloxysilyl-propyl methacrylate, or is represented by CAS No. 17096-07-0. The term "TRIS" also includes dimers of 3-methacryloxypropyltris(trimethylsiloxy) silane.

Preferred siloxane-containing macromers are selected from the group consisting of Macromer A, Macromer B, Macromer C, and Macromer D as described in US 5760100.

An "average water contact angle " refers to a contact angle (Sessile Drop) of water on a contact lens, which is obtained by averaging measurements with at least 3 individual contact lenses.

"Hydrophilic," as used herein, describes a material or portion thereof that will more readily associate with water than with lipids.

The term "hydrophobicity" in reference to a contact lens is intended to describe the poor surface wettability by water of a contact lens. The poor surface wettability by water of a contact lens is characterized to have an average water contact angle of greater than 100 degrees.

The invention is generally related to a method for dislodging (or removing or deblocking) a lens from a mold after lens curing and before lens extraction and/or hydration. Surprisingly it has been found, that hot water can be used efficiently to dislodge a hydrophobic silicone-hydrogel lens from its adhering mold half and to substantially reduce the stickiness (or tackiness) of the surfaces of the hydrophobic silicone-hydrogel lens.

It is believed that hot water, which preferably is substantially free of surfactant, may play the following several roles in dislodging a lens from a mold half and in reducing the tackiness of the surfaces of the lens. First, hot water can replace a portion of an organic solvent present in a molded silicone-hydrogel lens by exchange. Replacement of an organic solvent by water can decrease the swelling of the molded lens and make the molded lens smaller in diameter, allowing the molded lens to disengage from the mold surface. Second, the uncured polymerizable components (such as monomers, macromers and/or oligomers) located at the interface between a molded lens and a mold half can be dissolved in hot water. Dissolution of the uncured polymerizable components can reduce substantially the tackiness of the surfaces of a molded lens and facilitate the handling of the lens after dislodging from the mold half. Third, because of relatively high temperature, hot water can induce the contraction of thermally reversible silicone-hydrogel network while simultaneously cause the expansion of a lens-adhering mold half. As such, a silicone-hydrogel lens can be easily dislodged from the lens-adhering mold half.

There are several advantages associated with a method of the invention. First, application of hot water enables a molded lens to be dislodged from its adhering mold half without tearing the lens. Second, lens dislodging by hot water is a relatively fast process, for example, taking several seconds. Third, hot water can facilitate removal of a silicone-hydrogel lens from its adhering mold half while not removing flashes. Without flashes being attached to a lens, lens production yield can be increased. By dissolving flashes prior to extraction, extraction efficiency can be enhanced. Without mold halves, an extraction tank can accommodate much more lenses and product cost associated with extraction equipment can be decreased.

In one aspect, the invention provides a method for producing contact lenses. The method comprises: providing a mold including a male mold half having a first molding surface and a female mold half having a second molding surface, wherein the male and female mold halves are configured to receive each other such that a mold cavity is formed between the first and second molding surfaces when the mold is closed; dispensing a specific amount of a silicone hydrogel lens-forming material into one of the male and female mold halves; mating the male and female mold halves to close the mold; curing the silicone hydrogel lens-forming material located between the two mold halves, thereby forming a molded silicone hydrogel contact lens having a hydrophobicity characterized by an average water contact angle of greater than 100 degrees; separating the mold into the male and female mold halves, with the silicone hydrogel contact lens adhered on one of the male and female mold halves; dispensing a hot water over the lens and/or in the lens-adhering mold half; allowing the hot water to penetrate into interface between the lens and the lens-adhering mold half so as to reduce adhesion between the lens and the lens-adhering mold half; and removing the lens from the lens-adhering mold half for further processing.

Mold materials known in the art are for example, polymeric materials, such as polyethylene, polypropylene and PMMA. Further, other materials that allow UV light transmission could be used as mold materials, such as for example quartz glass.

Preferably, one of the female and male mold halves is subjected to a surface treatment, such as, for example, a corona treatment or a plasma treatment, prior to its use in order for the molded contact lens to adhere preferentially to one particular mold half when opening the mold. Such pre-treatment is for example described in US 5894002.

A hot water is intended to describe a water having a temperature of higher than 80°C, preferably from 90°C to 100°C. Hot water used to dislodge a silicone-hydrogel lens from a mold preferably is substantially free of surfactant. As used herein, the term "substantially free of surfactant" means that the concentration of one or more surfactants in hot water is less than 0.005% by weight, preferably less than 0.0001 % by weight, more preferably less than 0.00001 % by weight, even more preferably free of surfactant.

In accordance with the invention, a hot water is dispensed over the lens and/or in the lens-adhering mold half and then is allowed to penetrate into the interface between the lens and the lens-adhering mold half so as to reduce adhesion between the lens and the lens-adhering mold half. A period of time of at least 5 seconds, preferably at least 15 second, more preferably at least 30 seconds, even more preferably at least 1 minute is allowed to let hot water to penetrate into the interface between the lens and the lens-adhering mold half.

In a preferred embodiment, the molded lens is adhered to the female mold half. The hot water is dispensed in an amount sufficient to submerge the molded lens adhered on the female mold half.

After dispensing hot water and allowing the hot water to penetrate into the interface between the lens and the lens-adhering mold half, the lens can be removed by a lens removing device known to a person skilled in the art for example a pair of tweezers the tips of which are covered with silicone rubber.

In accordance with the invention, after dislodging from the mold half, the lens is preferably placed in a tray for further processing, such as, for example, extraction, hydration, equilibration, etc. As used herein, a tray is intended to describe a device which can hold a plurality of contact lenses. Preferred trays are those described in US 2003/0024829.

It is understood that a method of the invention can be performed manually or automatically under control of a computer. A person skilled in the art will known how to automate a method of the invention.

It is also understood that a silicone-hydrogel lens so produced can further be subject to other lens manufacturing processes, such as for example, surface treatment, sterilization, and the like.

"Surface treatment", as used herein, means that an article has been treated in a surface treatment process (or a surface modification process), in which, by means of contact with a vapor or liquid, and/or by means of application of an energy source (1) a coating is applied to the surface of an article, (2) chemical species are adsorbed onto the surface of an article, (3) the chemical nature (e.g. electrostatic charge) of chemical groups on the surface of an article are altered, or (4) the surface properties of an article are otherwise modified. Exemplary surface treatment processes include a surface treatment by energy (e.g. a plasma, a static electrical charge or irradiation), chemical treatments, the grafting of hydrophilic monomers or macromers onto the surface of an article, and layer-by-layer (LbL) deposition of polyelectrolytes. A preferred class of surface treatment processes are plasma processes, in which an ionized gas is applied to the surface of an article.

### Examples

### Example 1

### Synthesis of Macromer

51.5 g (50 mmol) of the perfluoropolyether Fomblin^{®} ZDOL (from Ausimont S.p.A, Milan, Italy) having a mean molecular weight of 1030 g/mol and containing 1.96 meq/g of hydroxyl groups according to end-group titration is introduced into a three-neck flask together with 50 mg of dibutyltin dilaurate (DBTDL). The flask contents are evacuated to about 20 mbar with stirring and subsequently decompressed with argon. This operation is repeated twice. 22.2 g (0.1 mol) of freshly distilled isophorone diisocyanate (IPDI) kept under argon are subsequently added in a counter stream of argon. The temperature in the flask is kept below 30°C by cooling with a water bath. After stirring overnight at room temperature, the reaction is complete. Isocyanate titration gives an NCO content of 1.40 meq/g (theory: 1.35 meq/g).

202 g of the α,ω-hydroxypropyl-terminated polydimethylsiloxane KF-6001 (from Shin-Etsu, Japan) having a mean molecular weight of 2000 g/mol (1.00 meq/g of hydroxyl groups according to titration) are introduced into a flask. The flask contents are evacuated to approx. 0.1 mbar and decompressed with argon. This operation is repeated twice. The degassed siloxane is dissolved in 202 ml of freshly distilled toluene kept under argon, and 100 mg of DBTDL are added. After complete homogenization of the solution, all the perfluoropolyether reacted with IPDI is added under argon. After stirring overnight at room temperature, the reaction is complete. The solvent is stripped off under a high vacuum at room temperature. Microtitration shows 0.36 meq/g of hydroxyl groups (theory 0.37 meq/g). 13.78 g (88.9 mmol) of 2-isocyanatoethyl methacrylate (IEM) are added under argon to 247 g of the α,σ-hydroxypropyl-terminated polysiloxane-perfluoropolyether-polysiloxane three-block copolymer (a three-block copolymer on stoichiometric average, but other block lengths are also present). The mixture is stirred at room temperature for three days. Microtitration then no longer shows any isocyanate groups (detection limit 0.01 meq/g). 0.34 meq/g of methacryl groups are found (theory 0.34 meq/g).

The macromer prepared in this way is completely colourless and clear. It can be stored in air at room temperature for several months in the absence of light without any change in molecular weight.

### Lens Formulation

The above prepared siloxane-containing macromer (for preparing lotrafilcon A lenses) is use in a lens-forming material comprising 37.4% macromer, 15.0% TRIS, 22.5% dimethyl acrylamide (DMA), 0.3% photoinitiator Darocure^{®} 1173, and 24.8% Ethanol. All percentages are by weight.

### Lens Production

The lens formulation prepared above is degassed to remove oxygen from the lens formulation. An amount of the degassed lens formulation is introduced into each polypropylene molds in a nitrogen glove box and cured under UV light to form contact lenses. After curing, each mold is separated into a male mold half and a female mold half, with a molded lens adhered to one of the male and female mold halves. Separated male and female mold halves are placed on different trays.

Where a lens is adhered to a female mold half, a hot water (95°C to 100°C) is dispensed in each female mold half with a lens. Where a lens is adhered to a male mold half, a hot water (95°C to 100°C) is dispensed in an empty female half and a male mold half with a lens adhered thereon is placed in the female mold half containing the hot water (with the molding surface of the male mold half facing down).

After dispensing the hot water, a minimum of one minute is allowed to let water penetrate into the interface between the lens and the mold half. The lens is slid or moved from the mold half using a pair of tweezers with tips covered with silicone rubber. The lens is placed on an extraction (or an extraction and drying) tray. Then, the lenses are extracted in IPA. After extraction, the lenses are dried and then subjected to plasma treatment according to procedures described in US 2002/0025389 to obtain plasma coatings. Lenses with plasma coatings are subjected to hydration and packaged in a lens container containing a packaging solution (e.g. a buffered saline). Packaged lenses are sterilized.

Two different water dispensing methods are tested.

In a first series of experiments, hot water is dispensed using an electrical hot water dispenser (Zojirushi, Japan). The temperature of hot water is controlled at 95°C. 0.75 ml of hot water is dispensed in each female mold half with a lens thereon. 1 to 5 minutes are allowed to let water penetrate into the interface between the lens and the mold half.

In a second series of experiments, dispensing of hot water is carried out manually by transferring 0.75 ml of hot water (100°C) from a beaker (maintained at 100°C) into a female mold half with a lens adhered thereon. 1 minute is allowed to let water penetrate into the interface between the lens and the mold half.

It is observed that the lens edge is separated from the critical edge during hot water application. At 100°C trial (the second series of experiments), separation of lenses from the mold surface occurs in a short period of time (e.g. several seconds) and all lenses are completely separated from the mold surface in the process time specified in the experiments. There are a couple of lenses, which needed a move by tweezers in order to separate the lens from the mold surface. However, in the first series of experiments done at 95°C, a longer process time is needed to free all lenses from the mold surface without tweezers.

The weights of lenses, which are separated mechanically and by hot water-assisted deblocking, are compared with each other. It is found that they are about the same weight.

### Example 2

Average water contact angles (Sessile Drop) of contact lenses are measured using a VCA 2500 XE contact angle measurement device (from AST Inc., Boston, USA). The averaged water contact angle of a contact lens, which is made of lotrafilcon A and prepared according to the procedures described above without any surface treatment (e.g., plasma coating), is 112 degrees.

Water contact angles on lenses, which are separated mechanically and by hot water assisted deblocking, are compared with each other (2 sets of each 8 contact lenses):
The average water contact angle on lenses which are separated mechanically is 91 degrees, whereas the average water contact angle on lenses which are separated by hot water-assisted deblocking is 107 degrees. These results may indicate that uncured components of the lens formulation may be washed off by hot water from the surface of a lens.

## Claims

1. A method for producing contact lenses, comprising the steps of :
a) providing a mold including a male mold half having a first molding surface and a female mold half having a second molding surface, wherein the male and female mold halves are configured to receive each other such that a mold cavity is formed between the first and second molding surfaces when the mold is closed;
b) dispensing a specific amount of a silicone hydrogel lens-forming material into one of the male and female mold halves;
c) mating the male and female mold halves to close the mold;
d) curing the silicone hydrogel lens-forming material located between the two mold halves, thereby forming a molded silicone hydrogel contact lens, wherein the silicone hydrogel contact lens is hydrophobic and **characterized by** an average water contact angle of greater than 100 degrees;
e) separating the mold into the male and female mold halves, with the silicone hydrogel contact lens adhered on one of the male and female mold halves;
f) dispensing a hot water over the lens and/or in the lens-adhering mold half;
g) allowing the hot water to penetrate into the interface between the lens and the lens-adhering mold half; and
h) removing the lens from the lens-adhering mold half for further processing.

2. The method of claim 1, wherein one of the female and male mold halves is subjected to a surface treatment prior to its use.

3. The method of claim 2, wherein the surface treatment is a corona treatment or a plasma treatment.

4. The method of claim 2, wherein the female mold half is subjected to the surface treatment.

5. The method of claim 2, wherein the male mold half is subjected to the surface treatment.

6. The method according to any preceding claim, wherein the hot water has a temperature of higher than 80°C.

7. The method according to any preceding claim, wherein the hot water has a temperature from 90°C to 100°C.

8. The method according to any preceding claim, wherein in step g) at least 5 seconds is allowed to let the hot water penetrate into interface between the lens and the lens-adhering mold half.

9. The method according to any preceding claim, wherein in step g) at least 1 minute is allowed to let the hot water penetrate into interface between the lens and the lens-adhering mold half.

10. The method according to any preceding claim, wherein in step h) the lens is placed in a tray for further processing.

## Patentansprüche

1. Verfahren zur Herstellung von Kontaktlinsen umfassend die Schritte:
a) Bereitstellen einer Form enthaltend eine männliche Formhälfte mit einer ersten formgebenden Oberfläche und einer weiblichen Formhälfte mit einer zweiten formgebenden Oberfläche, wobei die männliche und weibliche Formhälfte so ausgebildet sind, dass sie sich gegenseitig so aufnehmen, dass ein Formenhohlraum zwischen der ersten und zweiten formgebenden Oberfläche gebildet wird, wenn die Form geschlossen ist;
b) Dosieren einer bestimmten Menge eines linsenbildenden Silikonhydrogel-Materials in eine der männlichen oder weiblichen Formhälfte;
c) Zusammenfügen der männlichen und weiblichen Formhälfte zum Schließen der Form;
d) Härten des zwischen den Formhälften befindlichen linsen bildenden Silikonhydrogel-Materials, unter Bildung einer geformten Silikonhydrogel-Kontaktlinse, wobei die Silikonhydrogel-Kontaktlinse hydrophob ist und durch einen mittleren Wasserkontaktwinkel von mehr als 100 Grad **gekennzeichnet** ist;
e) Zerlegen der Form in die männliche und weibliche Formhälfte, wobei die Silikonhydrogel-Kontaktlinse an einer der männlichen oder weiblichen Formhälfte anhaftet;
f) Dosieren von heißem Wasser über die Linse und/oder in die linsenanhaftende Formhälfte;
g) Eindringenlassen des heißen Wassers in die Grenzschicht zwischen der Linse und der linsenanhaftenden Formhälfte; und
h) Entfernen der Linse aus der linsenanhaftenden Formhälfte zur weiteren Bearbeitung.

2. Verfahren gemäss Anspruch 1, wobei eine der weiblichen oder männlichen Formhälften vor ihrer Verwendung einer Oberflächenbehandlung unterworfen wird.

3. Verfahren gemäss Anspruch 2, wobei die Oberflächenbehandlung eine KoronaBehandlung oder eine Plasma-Behandlung ist.

4. Verfahren gemäss Anspruch 2, wobei die weibliche Formhälfte der Oberflächenbehandlung unterworfen wird.

5. Verfahren gemäss Anspruch 2, wobei die männliche Formhälfte der Oberflächenbehandlung unterworfen wird.

6. Verfahren gemäss einem der vorangehenden Ansprüche, wobei das heiße Wasser eine Temperatur von mehr als 80°C hat.

7. Verfahren gemäss einem der vorangehenden Ansprüche, wobei das heiße Wasser eine Temperatur von 90°C bis 100°C hat.

8. Verfahren gemäss einem der vorangehenden Ansprüche, wobei in Schritt g) mindestens 5 Sekunden für das Eindringen des heißen Wassers in die Grenzschicht zwischen der Linse und der linsen-anhaftenden Formhälfte zur Verfügung stehen.

9. Verfahren gemäss einem der vorangehenden Ansprüche, wobei in Schritt g) mindestens 1 Minute für das Eindringen des heißen Wassers in die Grenzschicht zwischen der Linse und der linsen-anhaftenden Formhälfte zur Verfügung steht.

10. Verfahren gemäss einem der vorangehenden Ansprüche, wobei in Schritt h) die Linse in eine Schale zur weiteren Bearbeitung abgelegt wird.

## Revendications

1. Procédé de production de lentilles de contact, comprenant les étapes consistant à:
a) partir d'un moule incluant une matrice de moule mâle ayant une première surface de moulage et une matrice de moule femelle ayant une deuxième surface de moulage, où les matrices de moule mâle et femelle sont configurées pour recevoir l'une l'autre de sorte qu'une cavité du moule est formée entre la première et la deuxième surface de moulage lorsque le moule est fermé;
b) introduire une quantité spécifique d'un matériau formateur de lentille hydrogel de silicone dans l'une des matrices de moule mâle et femelle;
c) assembler les matrices de moule mâle et femelle pour fermer le moule;
d) durcir le matériau formateur de lentille hydrogel de silicone qui se trouve entre les deux matrices du moule, formant ainsi une lentille de contact hydrogel de silicone moulée, la lentille de contact hydrogel de silicone étant hydrophobe et **caractérisée par** un angle de contact aqueux moyen supérieur à 100 degrés;
e) séparer le moule en matrices de moule mâle et femelle, la lentille de contact hydrogel de silicone étant collée sur l'une des matrices de moule mâle et femelle;
f) verser de l'eau chaude sur la lentille et/ou dans la matrice du moule sur laquelle est collée la lentille;
g) laisser l'eau chaude pénétrer dans l'interface entre la lentille et la matrice du moule sur laquelle est collée la lentille; et
h) enlever la lentille de la matrice du moule sur laquelle est collée la lentille pour un traitement ultérieur.

2. Procédé selon la revendication 1, dans lequel l'une des matrices de moule femelle et mâle est soumise à un traitement de surface avant son utilisation.

3. Procédé selon la revendication 2, dans lequel le traitement de surface est un traitement corona ou un traitement plasmatique.

4. Procédé selon la revendication 2, dans lequel la matrice de moule femelle est soumise au traitement de surface.

5. Procédé selon la revendication 2, dans lequel la matrice de moule mâle est soumise au traitement de surface.

6. Procédé selon l'une quelconque des revendications précédentes, dans lequel l'eau chaude a une température supérieure à 80°C.

7. Procédé selon l'une quelconque des revendications précédentes, dans lequel l'eau chaude a une température allant de 90°C à 100°C.

8. Procédé selon l'une quelconque des revendications précédentes, dans lequel dans l'étape g), on laisse l'eau chaude pendant au moins 5 secondes pour la faire pénétrer dans l'interface entre la lentille et la matrice de moule sur laquelle est collée la lentille.

9. Procédé selon l'une quelconque des revendications précédentes, dans lequel dans l'étape g), on laisse l'eau chaude pendant au moins 1 minute pour la faire pénétrer dans l'interface entre la lentille et la matrice de moule sur laquelle est collée la lentille.

10. Procédé selon l'une quelconque des revendications précédentes, dans lequel dans l'étape h), la lentille est placée dans un plateau pour un traitement ultérieur.
